# EUROPÄISCHE PATENTANMELDUNG

(11) **EP 1 500 862 A2**
(43) Veröffentlichungstag der Anmeldung: **26.01.2005**
(21) Anmeldenummer: 04014223.4
(22) Anmeldetag: 17.06.2004
(51) Int. Cl.: F16L 55/033

(54) **Abgasleitung für Heizgeräte**

(30) Priorität: 25.07.2003 DE 10333965
(71) Anmelder: ROBERT BOSCH GMBH, 70442 Stuttgart (DE)
(72) Erfinder: Fischer, Ralf, 73730 Sirnau (DE); Woerner, Philipp, 70794 Filderstadt (DE); Harzer, Olav, 70374 Stuttgart (DE)

(57) **Zusammenfassung**

Es wird eine Abgasleitung, insbesondere für ein Heizgerät, mit einem einen Strömungsquerschnitt aufweisenden Abgasrohr (22.1) vorgeschlagen. Innerhalb des Abgasrohres (22.1) sind beabstandet voneinander mindestens zwei Strömungsblenden (30.1, 30.2) angeordnet, die eine labyrinthartige Umlenkung des Abgases erzeugen.

## Beschreibung

Die Erfindung betrifft eine Abgasleitung, insbesondere für Heizgeräte, nach dem Oberbegriff des Anspruchs 1.

### Stand der Technik

Beim Betrieb von Heizgeräten entstehen Verbrennungsgeräusche, die sich in angrenzende Abgasführungen fortpflanzen. Eine weitere Ursache von Schallemissionen in Abgasleitungen von Heizgeräten sind schwingende Abgassäulen innerhalb der Abgasführung.

Zur Vermeidung von Schallübertragungen in die Abgasführung ist bereits beispielsweise aus DE 198 18 418 C2 bekannt, zwischen Heizgerät und Abgasführung einen Schalldämpfer, ähnlich wie bei Verbrennungsmotoren, einzusetzen, der zwischen Einlass und Auslass den Abgasstrom umlenkende Zwischenwandungen aufweist.

Ferner ist aus DE 42 26 890 C2 zur Vermeidung einer nach außen führenden Schallemission bekannt, den Mündungsbereich einer Abgasführung mit einem Schalldämpfer zu versehen.

### Vorteile der Erfindung

Die erfindungsgemäße Abgasleitung mit den kennzeichnenden Merkmalen des Anspruchs 1 hat den Vorteil, dass mit einfachen Mitteln eine Schalldämmung innerhalb des Abgasrohres erzielbar ist. Insbesondere die bei langen Abgasrohren auftretenden Schwingungserscheinungen mit den entsprechenden Geräuschen werden nahezu komplett beseitigt und damit eine deutliche Qualitätsverbesserung und Systemerweiterung erreicht. Die infolge der eingesetzten Blenden auftretende Drosselung der Abgasströmungsgeschwindigkeit führt außerdem zu einer messbaren Verringerung der Ausblasgeräusche an der Mündung des Abgasrohres. Die Erfindung hat bei sogenannten konventionellen Heizgeräten, bei denen das Heizgas nicht unterhalb des Taupunktes abgekühlt wird, den vorteilhaften Nebeneffekt, dass es durch die leichte Drosselung der Abgasströmungsgeschwindigkeit zu einer Anhebung des CO₂-Werte und damit zu einer Erhöhung des feuerungstechnischen Wirkungsgrades kommt. Dadurch wird eine Kondensation innerhalb der Brennkammer verhindert, wodurch die Lebensdauer des konventionellen Heizgerätes erhöht wird. Bei sogenannten Brennwertheizgeräten spielt diese Maßnahme keine Rolle, da hierbei die Kondensation des Heizgases ausgenutzt wird und entsprechende Maßnahmen innerhalb der Brennkammer bzw. des Wärmetauschers vorhanden sind, um das anfallende Kondensat zu sammeln und abzuführen.

Vorteilhafte Weiterbildungen der Erfindung gehen aus den Unteransprüchen hervor. Besonders vorteilhaft ist es, eine labyrinthartige Unterbrechung der Abgassäule vorzunehmen. Um eine Optimierung zwischen labyrinthartiger Umlenkung und möglichst geringer Drosselung des Abgasstroms zu erreichen, ist es zweckmäßig, die Blenden kreissegmentartig nicht über den Halbkreis des Abgasdurchmessers erstrecken zu lassen. Damit das im Abgasrohr entstehende Kondensat nicht in der Rohrmitte direkt in das Heizgerät abtropfen kann, sondern zur Rohrinnenwand abgeleitet wird, ist es zweckmäßig, die Blenden geneigt mit einem Gefälle zwischen 1 bis 3% anzubringen.

### Zeichnung

Ein Ausführungsbeispiel der Erfindung ist in der Zeichnung dargestellt und in der nachfolgenden Beschreibung näher erläutert.

Es zeigen
Figur 1 ein an eine Abgasleitung angeschlossenes Heizgerät,
Figur 2 ein Abgasrohr einer Abgasleitung in Schnittdarstellung,
Figur 3 eine Schnittdarstellung des Abgasrohres in Figur 2 in einer 90°-Drehung um die Längsachse,
Figur 4 eine Draufsicht auf eine Blende im vorgefertigten Zustand,
Figur 5 eine Draufsicht auf die Blende gemäß Figur 4 im einbaufertigen Zustand und
Figur 6 eine Schnittdarstellung nach der Linie VI - VI in Figur 2.

### Ausführungsbeispiel

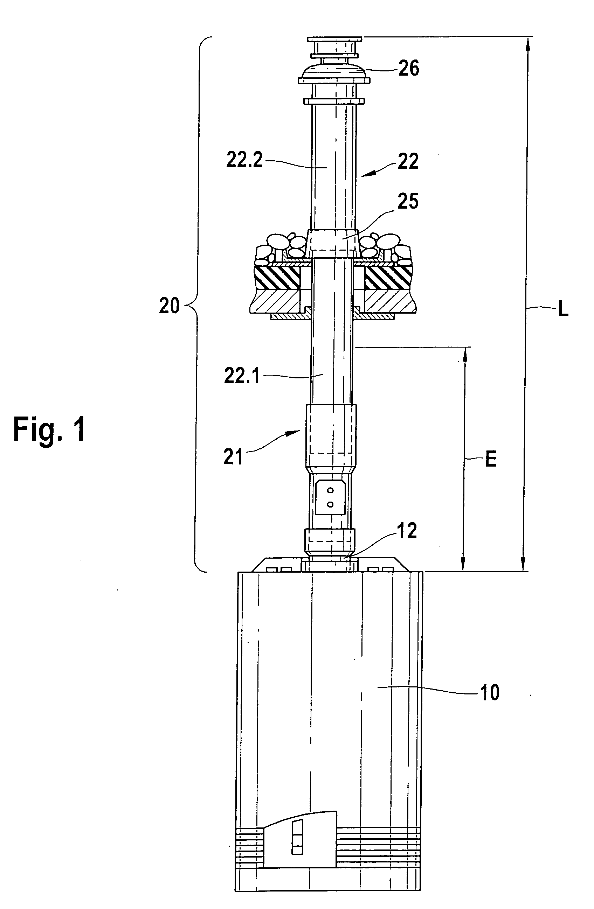

Figur 1 zeigt ein Heizgerät 10 mit einem Abgasauslass 12, an dem eine Abgasleitung 20 angeschlossen ist. Die Abgasleitung umfasst ein Anschluss-Stück 21 und beispielsweise mehrere zu einem Abgasrohr 22 zusammengesetzte Rohrstücke 22.1 und 22.2. Das Abgasrohr 22 ist ferner mit einer Dachdurchführung 25 nach außen geführt und an der Mündung mit einer Haube 26 versehen. Die Abgasleitung 20 besitzt eine Länge L, die von der oberen Gehäusekante des Heizgerätes 10 bis zur Mündung des Abgasrohres 21 gemessen ist. In der Abgasleitung ist eine Strömungsdrossel mit einem Einbauort E angeordnet.

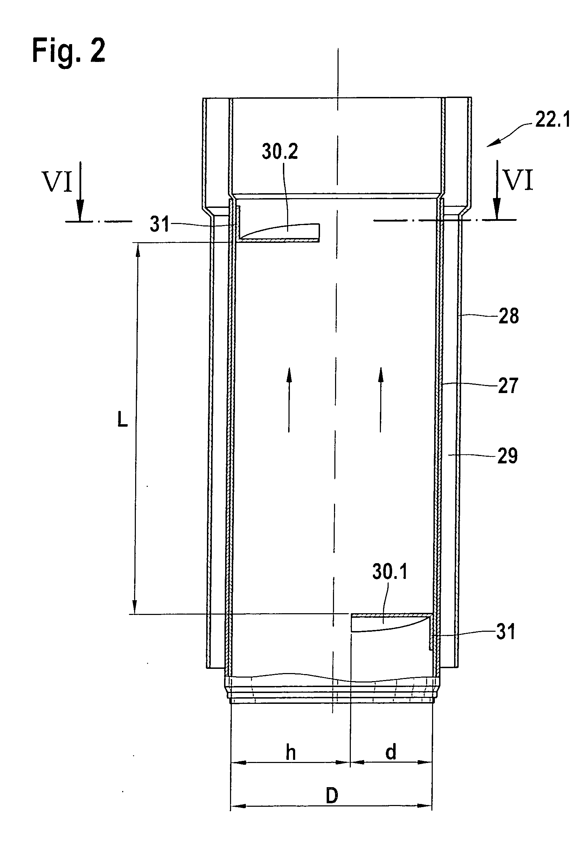

In Figur 2 ist das Rohrstück 21.1 dargestellt, mit einem Innenrohr 27 und einem koaxial dazu verlaufenden Außenrohr 28. Das Innenrohr 27 besitzt einen Innendurchmesser D und dient zur Abführung des Heizgases. Ein zwischen Innenrohr 27 und Außenrohr 28 existierende Ringkanal 29 dient zur Zuführung von Verbrennungsluft. Im vorliegenden Ausführungsbeispiel ist das Innenrohr 27 doppelwandig ausgeführt, so dass insgesamt ein 3-schaliges Rohrstück 22.1 entsteht. Die doppelwandige Ausführung des Innenrohres 27 wird bei sogenannten konventionellen Heizgeräten eingesetzt, bei denen das Heizgas nicht unter den Taupunkt abgekühlt werden soll. Die doppelwandige Ausführung des Innenrohrs 27 dient dabei zur Wärmeisolierung, so dass das im Innenrohr 27 strömende heiße Abgas durch die kalte Verbrennungsluft, insbesondere bei langen Abgasleitungen, nicht zu stark abgekühlt wird und dadurch ein Kondensieren des Heizgases innerhalb der Abgasführung vermieden wird. Die vorliegende Erfindung ist jedoch nicht nur für den Einsatz in Abgasführungen für konventionelle Heizgeräte geeignet, sondern genauso für den Einsatz in sogenannten Brennwertgeräten, bei denen die Kondensationswärme des Heizgases ausgenutzt wird.

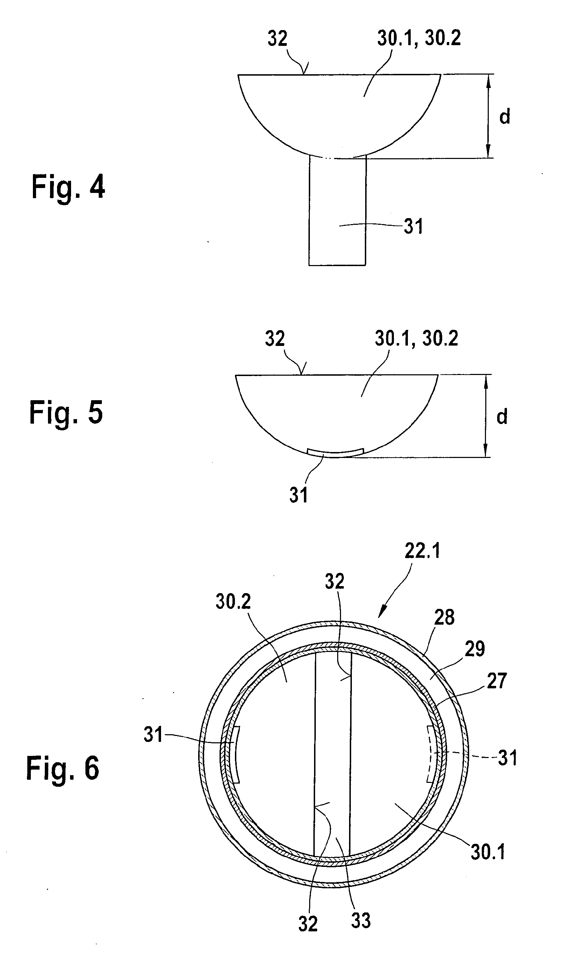

Im Innenrohr 27 des Rohrstücks 22.1 sind im Abstand 1 im Strömungsweg des Heizgases als Strömungsdrossel zwei Strömungsblenden 30.1 und 30.2 angeordnet. Der Abstand 1 lässt sich ermitteln nach der Formel 1 = X · D, wobei X einen Wert zwischen 3,5 und 5,5 besitzt. Die Strömungsblenden 30. 1 und 30.2 besitzen die in Figur 4 und 5 dargestellte Gestalt eines an den Innendurchmesser D angepassten Kreissegments mit einer Segmentkante 32 und mit einer Ausdehnung d, wobei d kleiner ist als der Radius des Innenrohres 27, d. h. d < D/2. Als zweckmäßig hat sich herausgestellt, die in den Abgasweg ragende Strömungsblenden 30.1, 30.2 mit einer Ausdehnung d nach der Formel d = D - (K · D) zu bemessen, wobei K ein Faktor zwischen 0,55 bis 0,7 sein kann. Als zweckmäßig hat sich K = 0,6 herausgestellt. Damit besitzt die lichte Weite h im Innenrohr 27 im Bereich der Strömungsblenden 30.1 und 30.2 den Wert D - d, d.h., dass h > d ist.

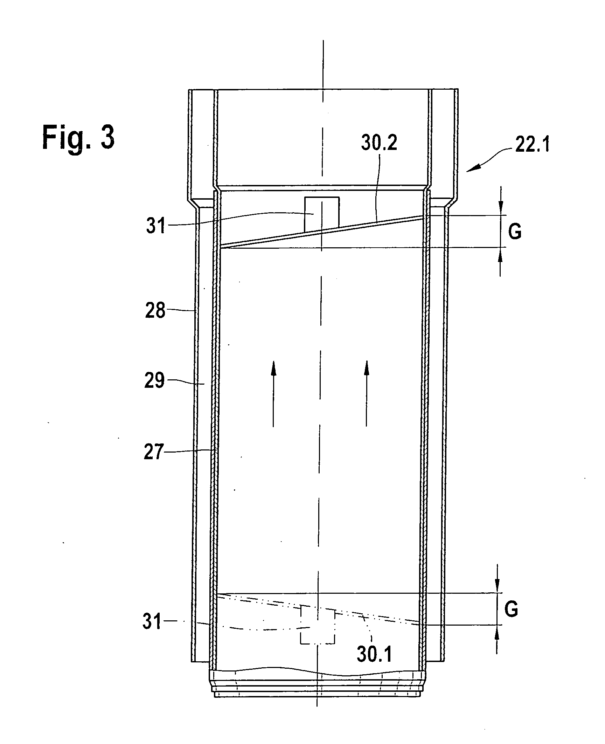

Als zweckmäßig hat sich ferner erwiesen, dass die Strömungsblenden, 30.1, 30.2 gemäß Figur 3 in Unfangsrichtung geneigt verlaufen, beispielsweise mit einem Gefälle G von 1 - 3%. Damit wird gewährleistet, dass das eventuell im Abgasrohr 21 anfallende Kondensat nicht innerhalb des Abgasrohres 22 bzw. des Rohrstücks 22.1 abtropft, sondern zur Wand des Abgasrohres 22 bzw. des Rohrstücks 22.1 abläuft.

Zur Befestigung der Strömungsblende 30.1, 30.2 innerhalb des Innenrohres 27 verfügen die Strömungsblenden 30.1, 30.2 jeweils über eine Befestigungslasche 31, die gemäß Figur 4 im ungebogenen Zustand und gemäß Figur 5 im gebogenen Zustand fertig zum Einbau dargestellt ist. Die beiden Strömungsblenden 30.1, 30.2 werden dabei beispielsweise mittels Punktschweißen der Befestigungslaschen 31 an der Innenwand des Innenrohres 27 befestigt.

Die Anordnung der Strömungsblenden 30.1 und 30.2 ist so gewählt, dass sie versetzt gegenüberliegend im Innenrohr 27 angeordnet sind, so dass gemäß der in Figur 6 dargestellten Draufsicht auf das Rohrstück 2.1 ihre Segmentkanten 32 in der senkrechten Projektion im Wesentlichen parallel zueinander verlaufen. Damit ist gewährleistet, dass der Abgasstrom eine labyrinthartige Umlenkung innerhalb des Abgasrohres 22 bzw. des Rohrstücks 22.1 erfährt. Durch die Bedingung d < D/2 ist außerdem gewährleistet, dass zwischen den gegenüberliegenden Segmentkanten 32 in der senkrechten Projektion betrachteten ein Spalt 33 vorliegt.

Die Anordnung der Strömungsblenden 30.1 und 30.2 in Bezug auf die gesamte Länge L der Abgasleitung 21 gemäß Figur 1 wird so gewählt, dass der Einbauort E etwa in der Mitte zwischen den beiden Strömungsblenden 30.1 und 30.2 liegt. Die Lage der beiden Blenden 30.1 und 30.3 sollten daher auf der Außenhaut des Abgasrohres 22, 22.1 markiert sein.

## Patentansprüche

**1.** Abgasleitung, insbesondere für ein Heizgerät, mit einem einen Strömungsquerschnitt für ein Abgas bildendes Abgasrohr (22, 22.1), **dadurch gekennzeichnet, dass** mindestens eine Strömungsblende (30.1, 30.2) vorgesehen ist, die den Strömungsquerschnitt des Abgasrohres (22, 22.1) verengt.

**2.** Abgasleitung nach Anspruch 1, **dadurch gekennzeichnet, dass** im Abgasrohr beabstandet voneinander mindestens zwei Strömungsblenden (30.1, 30.2) angeordnet sind.

**3.** Abgasleitung nach Anspruch 1 oder 2, **dadurch gekennzeichnet, dass** die Strömungsblenden (30.1, 30.2) im Abgasrohr (22, 22.1) derart angeordnet sind, dass das Abgas im Abgasrohr eine labyrinthartige Umlenkung erfährt.

**4.** Abgasleitung nach einem der vorhergehenden Ansprüche, **dadurch gekennzeichnet, dass** die Strömungsblenden (30.1, 30.2) als Kreissegment ausgebildet sind.

**5.** Abgasleitung nach Anspruch 4, **dadurch gekennzeichnet, dass** das Kreissegment der Strömungsblenden (30.1, 30.2) den Querschnitt des Abgasrohres (22, 22.1) jeweils um weniger als die Hälfte verengt.

**6.** Abgasleitung nach einem der vorhergehenden Ansprüche, **dadurch gekennzeichnet, dass** die Strömungsblenden (30.1, 30.2) in Umfangsrichtung geneigt verlaufen.

**8.** Abgasleitung nach einem der vorhergehenden Ansprüche, **dadurch gekennzeichnet, dass** der Abstand 1 zwischen zwei benachbarten Strömungsblenden (30.1, 30.2) nach der Formel 1= X · D bemessen ist, wobei X ein Faktor zwischen 3,5 und 5,5 ist und D der Innendurchmesser D des Abgasrohres (22, 22.1).
